# EUROPÄISCHE PATENTANMELDUNG

(11) **EP 2 360 056 A1**
(43) Veröffentlichungstag der Anmeldung: **24.08.2011**
(21) Anmeldenummer: 11150174.8
(22) Anmeldetag: 05.01.2011
(51) Int. Cl.: B60R 5/04, B60J 7/00

(54) **Rolloanordung**

(30) Priorität: 12.02.2010 DE 102010007732
(71) Anmelder: HS Genion GmbH, 82205 Gilching (DE)
(72) Erfinder: Kaiser, Stefan, 86424, Dinkelscherben (DE)
(74) Vertreter: advotec.

(57) **Zusammenfassung**

Die Erfindung betrifft eine Rolloanordnung eines Kraftfahrzeugs, umfassend eine Rollobahn (38), die mittels einer Wickeleinrichtung zur Ausbildung eines Wickelkörpers aufwickelbar ist und die an ihrem dem Wickelkörper abgewandten freien Ende eine Zugeinrichtung (46) aufweist. Ein Aufwickeln und/ein Ausziehen der Rollobahn (38) löst eine Betätigung einer Reinigungsbürste (48) aus, die etwaige Verunreinigungen von der Rollobahn (38) entfernt.

## Beschreibung

Die Erfindung betrifft eine Rolloanordnung nach dem Oberbegriff des Patentanspruchs 1 sowie einen Fahrzeugsitz nach dem Oberbegriff des Patentanspruchs 11.

Rolloanordnungen werden im Bereich von Kraftfahrzeugen in vielfältiger Weise eingesetzt. Beispielsweise kann ein Rollo zur Abschattung eines transparenten Dachabschnitts oder auch zur Abschattung von Seitenfenstern des Kraftfahrzeugs eingesetzt werden. Des Weiteren werden Rolloanordnungen als oberseitige Laderaumabdeckung eingesetzt, die mit einer Rollokassette ausgestattet ist, welche heckseitig einer Rückenlehne einer Fahrzeugrückbank fixiert ist. In der Rollokassette ist eine Wickelwelle drehbar gelagert, an der eine Rollobahn fixiert ist, die auf die Wickelwelle aufwickelbar bzw. von der Wickelwelle abwickelbar ist. Der Abwickelvorgang erfolgt in der Regel manuell. Der Aufwickelvorgang kann mittels einer Wickelfeder erfolgen, die die Wickelwelle in Aufwickelrichtung vorspannt, so dass das Aufwickeln der Rollobahn nach deren Freigabe selbsttätig erfolgt.

Nachteilig bei bekannten Rolloanordnungen ist es, dass insbesondere die Oberseite der Rollobahn mit der Zeit verschmutzt. Beim Aufwickeln der Rollobahn führt das dazu, dass der Schmutz von der Rollooberseite auf die Rollounterseite übertragen wird. Die Reinigung der Rollobahn gestaltet sich daher aufwändig und ist gegebenenfalls gar nicht in hinreichender Weise möglich.

Des Weiteren ist es aus der Praxis bekannt, Fahrzeugsitze zum Schutz des festen Polsterbezugs mit einem Schonbezug zu versehen. Ein solcher wird in der Regel über die Polsterung gespannt, wodurch der feste Polsterbezug zumindest an verschmutzungsträchtigen Stellen abgedeckt wird. Das Befestigen und Abnehmen derartiger Schonbezüge ist jeweils zeitaufwändig.

Der Erfindung liegt die Aufgabe zugrunde, eine Rolloanordnung mit einer wirksamen Reinigungsfunktion sowie einen einfach installierbaren Schonbezug zu schaffen.

Erfindungsgemäß wird daher eine Rolloanordnung mit den Merkmalen des Patentanspruchs 1 vorgeschlagen.

Die Rolloanordnung nach der Erfindung umfasst also eine Rollobahn, die mittels einer Wickeleinrichtung zur Ausbildung eines Wickelkörpers aufwickelbar ist und die an ihrem dem Wickelkörper abgewandten freien Ende eine Zugeinrichtung aufweist. Ein Aufwickeln und/oder ein Ausziehen der Rollobahn löst eine Betätigung einer Reinigungsbürste aus, die etwaige Verunreinigungen von der Rollobahn entfernt.

Der Kern der Erfindung besteht mithin darin, eine Rollobahn mit integrierter Reinigungsfunktion in Form einer Bürste vorzusehen, die durch den Wickelvorgang der Rollobahn stets und automatisch mit betätigt wird. Die Rollobahn unterliegt daher während ihres Auf- und/oder Abwickelns einer ständigen Reinigung.

Bei einer bevorzugten Ausführungsform der Rolloanordnung nach der Erfindung ist die Reinigungsbürste eine Rotationsbürste, deren Achse zumindest annähernd parallel zur Achse des Wickelkörpers ausgerichtet ist und die sich bei einer Betätigung der Rollobahn dreht. Der Antrieb der Rotationsbürste erfolgt also durch die Drehbewegung des Wickel- bzw. Rollokörpers.

Die Wickeleinrichtung, mittels der die Rollobahn zur Ausbildung eines Wickelkörpers aufwickelbar ist, ist vorzugsweise eine Wickelwelle, die mittels einer Wickelfeder in Aufwickelrichtung vorgespannt ist.

Zur Kopplung der Wickelwelle und der Reinigungsbürste ist es vorteilhaft, wenn die Wickelwelle über ein Getriebe mit der Reinigungsbürste verbunden ist.

Das Getriebe kann in vielfältiger Weise ausgebildet sein. Die Ausbildung erfolgt beispielsweise in Abhängigkeit von der gewünschten Drehrichtung der in der Regel als Rotationsbürste ausgebildeten Reinigungsbürste. Wenn der Drehsinn der Rotationsbürste dem Drehsinn der Wickelwelle entsprechen soll, umfasst das Getriebe beispielsweise einen Zahnriemen oder einen Keilriemen, der auf korrespondierenden Riemenscheiben der Wickelwelle und der Reinigungsbürste angeordnet ist. Im Falle eines Zahnriemens können die Riemenscheiben als Stirn- bzw. Zahnräder ausgebildet sein.

Wenn der Drehsinn der Wickelwelle und der Rotationsbürste gegensinnig sein soll, kann das Getriebe Stirnräder der Wickelwelle und der Reinigungsbürste umfassen, die ineinandergreifen bzw. miteinander kämmen.

Um einer Verschmutzung der Reinigungsbürste entgegenzuwirken, ist es vorteilhaft, wenn die Reinigungsbürste bei ihrer Betätigung über einen Schmutzabstreifer läuft, der beispielsweise in Form einer Leiste ausgebildet ist.

Um den Schmutz, den der Schmutzabstreifer von der Reinigungsbürste entfernt, gezielt entsorgen und die Rolloanordnung insgesamt sauber halten zu können, fördert der Schmutzabstreifer den von der Reinigungsbürste abgestreiften Schmutz vorzugsweise in einen Schmutzfänger, der insbesondere als Schmutzschublade ausgebildet ist.

Zweckmäßigerweise ist die Rolloanordnung nach der Erfindung mit einer Rollokassette ausgestattet, in der die Wickelwelle und die Reinigungsbürste gelagert sind. Die Rollokassette nimmt, sofern vorhanden, auch den Schmutzabstreifer und den Schmutzfänger bzw. die Schmutzschublade auf, die dann unabhängig von der sonstigen Mechanik der Rolloanordnung entnommen und entleert werden kann.

Die Rolloanordnung nach der Erfindung kann innerhalb eines Fahrzeugs verschiedene Anwendungen haben. Insbesondere ist die Rolloanordnung aber derart ausgelegt, dass die Rollobahn eine ausziehbare Laderaumabdeckung oder auch ein ausziehbarer Schonbezug eines Fahrzeugsitzes ist.

Die Erfindung hat auch einen Fahrzeugsitz zum Gegenstand, der ein
Sitzelement und eine Rückenlehne umfasst. Dieser Fahrzeugsitz umfasst erfindungsgemäß mindestens einen ausziehbaren Schonbezug zumindest für das Sitzelement.

Der ausziehbare Schonbezug ist insbesondere aus einer Rollobahn einer Rolloanordnung gebildet.

Bei einer bevorzugten Ausführungsform des Fahrzeugsitzes nach der Erfindung ist der ausziehbare Schonbezug aus einer Rollobahn einer Rolloanordnung mit einer Reinigungsbürste der oben beschriebenen Art ausgestattet.

Vorzugsweise weist die Rollobahn eine Einhängeeinrichtung auf, mittels der sie in ihrer ausgezogenen Stellung, in der das Sitzelement überdeckt ist, gesichert werden kann.

Die Anordnung der Rolloanordnung des Fahrzeugsitzes ist zweckmäßigerweise derart gewählt, dass die Rollobahn einen Spalt zwischen der Rückenlehne und dem Sitzelement durchgreift. Ein Benutzer kann damit eine Ausziehlasche bzw. einen Ausziehspriegel der Rollobahn in deren aufgewickelten Zustand greifen und die Rollobahn über das Sitzelement ziehen. Auf diese Weise kann das Sitzelement beispielsweise beim Mitführen von Kindern vor einer ungewünschten Verschmutzung geschützt werden.

Der im Sinne der Erfindung ausgebildete Schonbezug kann insbesondere auch eine Auflagefläche für einen Kindersitz bilden, wodurch Abdrücke des Kindersitzes im fest angeordneten Sitzbezug bzw. Polsterbezug verhindert werden können.

Beispielsweise kann der Fahrzeugsitz nach der Erfindung, der mit dem ausziehbaren Schonbezug ausgestattet ist, zusätzlich mit Fixierbügeln für einen Kindersitz ausgestattet sein.

Weitere Vorteile und vorteilhafte Ausgestaltungen des Gegenstands der Erfindung sind der Beschreibung, der Zeichnung und den Patentansprüchen entnehmbar.

Ein Ausführungsbeispiel eines Kraftfahrzeugs mit Rolloanordnungen nach der Erfindung ist in der Zeichnung schematisch vereinfacht dargestellt und wird in der nachfolgenden Beschreibung näher erläutert. Es zeigt:
- Fig. 1: eine schematische Seitenansicht eines Kraftfahrzeugs mit Rolloanordnungen nach der Erfindung; und
- Fig. 2: eine schematische und perspektivische Draufsicht auf eine Rolloanordnung in Alleinstellung.

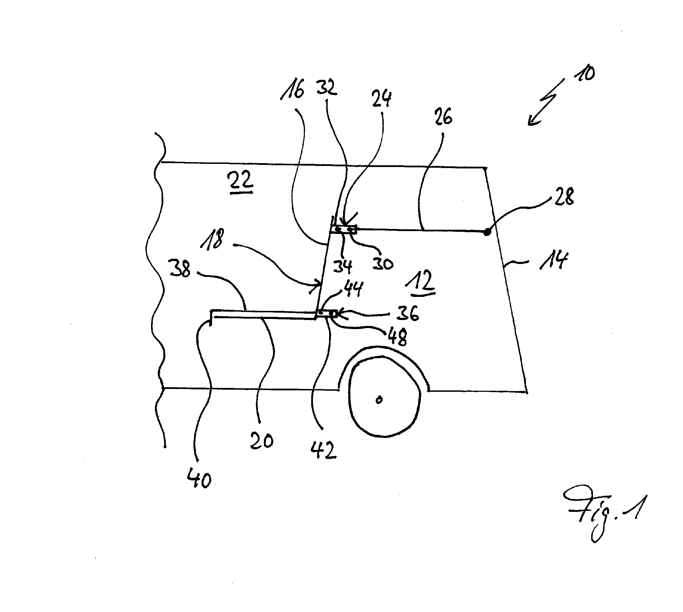

In Fig. 1 ist ein Kraftfahrzeug 10 dargestellt, das als so genanntes Kombi-Fahrzeug ausgebildet ist und einen Laderaum 12 aufweist, der heckseitig von einer Heckklappe 14 begrenzt ist. Bugseitig ist der Laderaum 12 von einer Rückenlehne 16 eines Rücksitzes 18 des Kraftfahrzeugs 10 begrenzt, der zusätzlich zu der Rückenlehne 16 ein Sitzelement 20 aufweist, welches die Sitzfläche für einen Fahrzeuginsassen bildet.

Um den Laderaum 12 oberseitig verschließen zu können und einen Fahrzeuginsassenraum 22 vor Gegenständen schützen zu können, die gegebenenfalls in Unfallsituationen oder dergleichen aus dem Laderaum 12 in den Fahrzeuginsassenraum 22 geschleudert werden könnten, weist das Kraftfahrzeug 10 des Weiteren eine als Rolloanordnung ausgebildete Laderaumabdeckung 24 auf, die eine ausziehbare Rollobahn 26 umfasst. Die Rollobahn 26 weist an ihrem freien, hinteren Ende einen Zugspriegel 28 auf, über den die Rollobahn 26 im ausgezogenen Zustand an einem Einhängelement des Fahrzeugaufbaus gesichert werden kann. Die Rollobahn 26 ist mit ihrem dem Zugspriegel 28 abgewandten Ende an einer Wickelwelle 30 befestigt, die in einer Rollokassette 32 drehbar gelagert ist und die mittels einer hier nicht näher dargestellten Wickelfeder in Aufwickelrichtung der Rollobahn 26 vorgespannt ist. Damit erfolgt bei Freigabe des Zugspriegels 28 ein selbsttätiges Aufwickeln der Rollobahn 26 auf die Wickelwelle 30.

Die Rolloanordnung 24 weist zudem eine als Rotationsbürste ausgebildete Reinigungsbürste 34 auf, die über ein nicht näher dargestelltes Getriebe mit der Wickelwelle 30 gekoppelt ist und bei einer Drehung der Wickelwelle 30 den gegebenenfalls auf der Oberseite der Rollobahn 26 abgelagerten Schmutz entfernt. Der Drehsinn der Rotationsbürste 34 ist gleichsinnig zu dem Drehsinn der Wickelwelle 30. In diesem Fall umfasst das Getriebe vorzugsweise einen Zahnriemen, der auf Zahnrädern der Wickelwelle 30 und der Rotationsbürste 34 angeordnet ist. Die Rotationsbürste 34 wird also beim Aufwickeln der Rollobahn 26 durch die Kraft der Wickelfeder der Wickelwelle 30 angetrieben.

Im Bereich eines Übergangs zwischen der Rückenlehne 16 und dem Sitzelement 20 des Rücksitzes 18 des Kraftfahrzeugs 10 ist eine weitere Rolloanordnung 36 angeordnet, die eine Rollobahn 38 umfasst, welche als ausziehbarer Schonbezug für das Sitzelement 20 des Rücksitzes 18 dient. Zur Fixierung in ihrer ausgezogenen und das Sitzelement 20 überdeckenden Stellung weist die Rollobahn 38 an ihrem freien Ende eine beispielsweise als Haken oder dergleichen ausgebildete Einhängeinrichtung 40 auf, die mit einem korrespondierenden, sitzfesten Gegenelement in Eingriff gebracht werden kann.

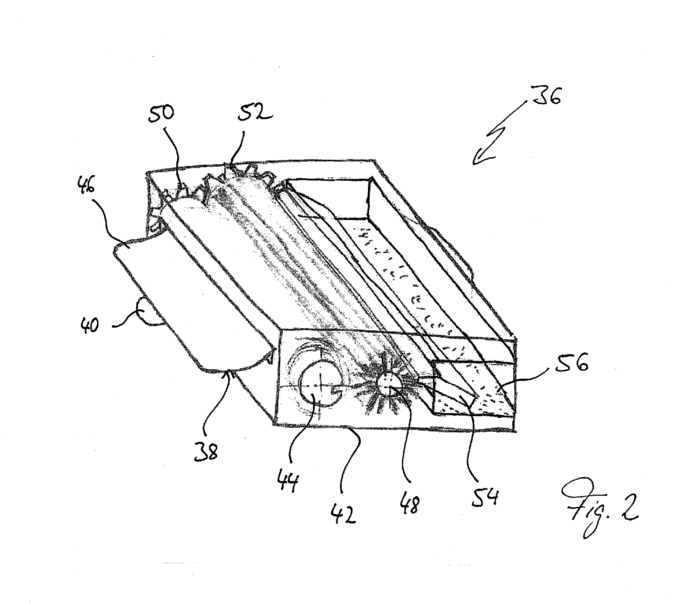

Die Rolloanordnung 36, deren grundsätzlicher Aufbau demjenigen der Rolloanordnung 24 entspricht, ist in Fig. 2 detailliert dargestellt. Sie umfasst eine ein Gehäuse bildende Rollokassette 42, die sitzfest montiert ist und in der eine Wickelwelle 44 drehbar gelagert ist, welche in der Rollobahn 38 mit ihrem der Einhängeinrichtung 40 abgewandten Ende befestigt ist und auf die die Rollobahn 38 aufwickelbar ist. Die Wickelwelle 44 ist mittels einer Wickelfeder in Aufwickelrichtung der Rollobahn 38 vorgespannt, so dass deren Aufwickelvorgang selbsttätig erfolgen kann. Des Weiteren grenzt die Einhängeinrichtung 40 der Rollobahn 38 an einen Zugspriegel 46 der Rollobahn 38, der eine starre Aufdickung der Rollobahn darstellt und verhindert, dass die Rollobahn 38 bei ihrem Aufwickeln vollständig in die Rollokassette 42 eintaucht bzw. von dieser vollständig aufgenommen wird.

Zur Reinigung der Oberseite der Rollobahn 38, die einen Spalt zwischen der Rückenlehne 16 und dem Sitzelement 20 durchgreift, ist in der Rollokassette 42 eine Rotationsbürste 48 drehbar gelagert, deren Drehachse parallel zur Drehachse der Wickelwelle 44 ausgerichtet ist und die über ein Stirnrad 52, das an einem Ende der Rotationsbürste 48 angeordnet ist und mit einem Stirnrad 50 der Wickelwelle 44 greift, mit der Wickelwelle 44 rotatorisch gekoppelt ist. Eine Drehung der Wickelwelle 44 führt mithin zu einer gegensinnigen Drehung der Rotationsbürste 48, wodurch eine Reinigung der Oberseite der Rollobahn 38 erfolgt.

In der Rollokassette 42 ist des Weiteren ein Schmutzabstreifer 54 angeordnet, der aus einer Leiste besteht, die parallel zur Achse der Rotationsbürste 48 ausgerichtet ist und die bei einer Drehung der Rotationsbürste Schmutz von den Borsten der Rotationsbürste 48 abstreift. Dieser Schmutz wird in einen als Schublade ausgebildeten Schmutzfänger 56 gefördert, der zur Entleerung unabhängig von der sonstigen Mechanik der Rolloanordnung 36 aus der Rollokassette 42 entnommen und geleert werden kann.

### Bezugszeichenliste

- 10: Kraftfahrzeug
- 12: Laderaum
- 14: Heckklappe
- 16: Rückenlehne
- 18: Rücksitz
- 20: Sitzelement
- 22: Fahrzeuginsassenraum
- 24: Laderaumabdeckung
- 26: Rollobahn
- 28: Zugspriegel
- 30: Wickelwelle
- 32: Rollokassette
- 34: Reinigungsbürste
- 36: Rolloanordnung
- 38: Rollobahn
- 40: Einhängeeinrichtung
- 42: Rollokassette
- 44: Wickelwelle
- 46: Zugspriegel
- 48: Rotationsbürste
- 50: Stirnrad
- 52: Stirnrad
- 54: Schmutzabstreifer
- 56: Schmutzfänger

## Patentansprüche

1. Rolloanordnung eines Kraftfahrzeugs, umfassend eine Rollobahn (26, 38), die mittels einer Wickeleinrichtung zur Ausbildung eines Wickelkörpers aufwickelbar ist und die an ihrem dem Wickelkörper abgewandten freien Ende eine Zugeinrichtung (28, 46) aufweist, **dadurch gekennzeichnet,**
**dass** ein Aufwickeln und/ein Ausziehen der Rollobahn (26, 38) eine Betätigung einer Reinigungsbürste (34, 48) auslöst, die etwaige Verunreinigungen von der Rollobahn (26, 38) entfernt.

2. Rolloanordnung nach Anspruch 1,
**dadurch gekennzeichnet,**
**dass** die Reinigungsbürste (34, 48) eine Rotationsbürste ist, deren Achse zumindest annähernd parallel zur Achse des Wickelkörpers ist und die sich bei einer Betätigung der Rollobahn (26, 38) dreht.

3. Rolloanordnung nach Anspruch 1 oder 2,
**dadurch gekennzeichnet,**
**dass** die Wickeleinrichtung eine Wickelwelle (30, 44) ist, die mittels einer Wickelfeder in Aufwickelrichtung vorgespannt ist.

4. Rolloanordnung nach Anspruch 2 und 3,
**dadurch gekennzeichnet,**
**dass** die Wickelwelle (30, 44) über ein Getriebe mit der Reinigungsbürste (34, 48) verbunden ist.

5. Rolloanordnung nach Anspruch 4,
**dadurch gekennzeichnet,**
**dass** das Getriebe einen Zahnriemen oder einen Keilriemen umfasst, der auf Ritzeln oder Riemenscheiben der Wickelwelle (30, 44) und der Reinigungsbürste (34, 48) angeordnet ist.

6. Rolloanordnung nach Anspruch 4,
**dadurch gekennzeichnet,**
**dass** das Getriebe Stirnräder (50, 52) umfasst, die an der Wickelwelle (30, 44) und der Reinigungsbürste (34, 48) angeordnet sind und die ineinandergreifen.

7. Rolloanordnung nach einem der Ansprüche 1 bis 6,
**dadurch gekennzeichnet,**
**dass** die Reinigungsbürste (34, 48) bei ihrer Betätigung über einen Schmutzabstreifer (54) läuft.

8. Rolloanordnung nach Anspruch 7,
**dadurch gekennzeichnet,**
**dass** der Schmutzabstreifer (54) den von der Reinigungsbürste (36, 48) abgestriffenen Schmutz in einen Schmutzfänger (56), insbesondere in eine Schmutzschublade fördert.

9. Rolloanordnung nach einem der Ansprüche 1 bis 8,
**gekennzeichnet**
**durch** eine Rollokassette (42), in der die Wickelwelle (30, 44) und die Reinigungsbürste (34, 48) gelagert sind.

10. Rolloanordnung nach einem der Ansprüche 1 bis 9,
**dadurch gekennzeichnet,**
**dass** die Rollobahn eine ausziehbare Laderaumabdeckung (26) oder ein ausziehbarer Schonbezug (38) eines Fahrzeugsitzes (18) ist.

11. Fahrzeugsitz, umfassend ein Sitzelement (20) und eine Rückenlehne (16), **gekennzeichnet durch** einen ausziehbaren Schonbezug (38) zumindest für das Sitzelement (20).

12. Fahrzeugsitz nach Anspruch 11,
**dadurch gekennzeichnet,**
**dass** der ausziehbare Schonbezug aus einer Rollobahn (38) einer Rolloanordnung (36) gebildet ist.

13. Fahrzeugsitz nach Anspruch 11,
**dadurch gekennzeichnet,**
**dass** der ausziehbare Schonbezug aus einer Rollobahn (38) einer Rolloanordnung (36) nach einem der Ansprüche 1 bis 10 gebildet ist.

14. Fahrzeugsitz nach einem der Ansprüche 11 bis 13,
**dadurch gekennzeichnet,**
**dass** die Rollobahn (38) eine Einhängeeinrichtung (40) aufweist, mittels der die Rollobahn (38) in ihrer ausgezogenen und das Sitzelement (20) überdeckenden Stellung gesichert werden kann.

15. Fahrzeugsitz nach einem der Ansprüche 11 bis 14,
**dadurch gekennzeichnet,**
**dass** die Rollobahn (38) einen Spalt zwischen der Rückenlehne (16) und dem Sitzelement (20) durchgreift.

16. Fahrzeugsitz nach einem der Ansprüche 1 bis 15,
**dadurch gekennzeichnet,**
**dass** eine Rollokassette (32) im Bereich des Übergangs zwischen dem Sitzelement (20) und der Rückenlehne (16) angeordnet ist.
